# EUROPEAN PATENT APPLICATION

(11) **EP 4 583 242 A1**
(43) Date of publication of application: **09.07.2025**
(21) Application number: 24222145.5
(22) Date of filing: 20.12.2024
(51) Int. Cl.: H01M 10/48, H01M 10/613, H01M 10/6235, H01M 10/6563, H01M 50/204, H01M 50/24, H01M 50/247

(54) **BATTERY PACK APPARATUS, GARDENING APPARATUS AND CONTROLLING METHOD THEREOF**

(30) Priority: 29.12.2023 CN 202311869945; 29.12.2023 CN 202323666497 U
(71) Applicant: Greenworks (Jiangsu) Co., Ltd., Changzhou, Jiangsu 213023 (CN)
(72) Inventor: LUO, Ming, Changzhou (CN); ZHUO, Cuicui, Changzhou (CN); ZHUANG, Xian, Changzhou (CN)
(74) Representative: Bergenstråhle & Partners AB

(57) **Abstract**

A battery pack apparatus includes a housing (11), a support frame (14), at least one battery cell module (15), a heat dissipation air duct, at least one first fan (17a) and a controller (19). The support frame (14) is disposed within a accommodating space of the housing (11). The at least one battery cell module (15) is mounted in the accommodating space via the support frame (14). The heat dissipation air duct is formed within the accommodating space. Two ends of the heat dissipation air duct are respectively in communication with air vents (12) on the opposite sides of the housing (11). The at least one first fan (17a) is capable of bidirectional rotation, is disposed within the accommodating space, and is positioned adjacent to one of the airvents (12).

## Description

### TECHNICAL FIELD

The present invention is related to a battery pack apparatus and controlling method, and more particularly related to a battery pack apparatus, a gardening apparatus and controlling method providing safety and flexible control.

### BACKGROUND

Gardening tools often require extended continuous operation, such as trimming, pruning, and mowing lawns. These tasks may take several hours or even an entire day to complete, necessitating the use of high-capacity battery packs to support prolonged usage.

Taking a lawn mower as an example, to meet the demands of extended operation, it is equipped with a high-capacity battery pack. The battery pack is installed within a battery compartment on the lawn mower, which is designed with large air vents to ensure proper ventilation and heat dissipation.

The battery compartment is also designed to connect with the outside environment for optimal airflow. However, during lawn mower operation, debris such as grass clippings and dust are often drawn into the battery compartment and eventually accumulate inside the battery pack through its airvents.

This accumulation of debris and dust inside the battery pack can degrade its performance over time, posing a challenge for maintaining the efficiency of the battery system. Ensuring effective ventilation while preventing contamination is critical for the reliable operation of gardening tools.

One current solution to this issue is the addition of a dustproof net to the battery pack. This dustproof net helps block debris and dust from entering the battery pack through the airvents during operation.

However, the dustproof net itself can become clogged with debris and dust after a period of use. This blockage can hinder airflow, compromising the ventilation and heat dissipation of the battery pack and potentially reducing its efficiency.

The design of dustproof systems for battery packs must strike a balance between preventing debris ingress and maintaining efficient heat dissipation. Regular maintenance of the dustproof net may be necessary to ensure consistent performance.

Battery pack solutions for gardening tools continue to evolve to meet the challenges of prolonged operation in demanding environments. Innovations in battery compartment and air vent design aim to minimize debris accumulation while ensuring effective cooling.

High-capacity battery packs are indispensable for modern gardening tools, offering both the energy needed for extended operation and the potential for innovative features to address environmental challenges.

As gardening tools are expected to handle intensive tasks in various conditions, the development of battery packs with robust dustproof and ventilation mechanisms remains a key area of focus.

### SUMMARY

In certain designs, a battery pack apparatus includes components such as a housing, a support frame, at least one battery cell module, a heat dissipation air duct, at least one first fan, and a controller. The housing has an accommodating space, and includes airvents formed on opposite sides of the housing. The support frame is situated inside the accommodating space of the apparatus and provides structural stability to securely hold the battery cell module. This module, essential for energy storage, is mounted within the accommodating space via the support frame, ensuring optimal placement for both functionality and safety.

The heat dissipation air duct is an integral part of the design, strategically formed within the accommodating space to manage heat generated during operation. Both ends of this air duct are connected to airvents located on opposite sides of the housing, facilitating effective airflow for cooling purposes. For instance, in a high-capacity battery pack used in a gardening tool like a lawn mower, such an air duct system is critical to preventing overheating.

The apparatus also incorporates at least one first fan, which is capable of bidirectional rotation. This fan is positioned adjacent to one of the air vents within the accommodating space, playing a key role in managing the internal temperature. The fan operates within a power range of 0.8W to 20W, allowing it to provide adequate airflow without excessive energy consumption.

The controller is a vital electronic component that connects to the first fan. It is programmed to regulate the fan's operation based on preset conditions. For example, the controller directs the fan to blow air in one direction under a first condition, such as during charging, and in the opposite direction under a second condition, such as during discharging. This bidirectional control enhances heat dissipation efficiency and ensures stable performance of the battery pack.

In some implementations, the first preset condition might involve the battery pack temperature being within a specified range. For example, the fan may blow air in one direction if the temperature falls within a lower range and reverse direction when the temperature enters a higher range. This adaptability helps maintain an optimal operating environment for the battery cells, improving longevity and performance.

The battery pack apparatus may also include additional components like a status indication device. This device, connected to the controller, provides real-time feedback on the operational status of the fan. For instance, it might feature a display to visually indicate whether the fan is operating or an audio signal to alert users to specific modes of operation. Such features enhance user awareness and system monitoring.

Another optional component is a collection unit, which connects to both the battery cell module and the controller. This unit is designed to monitor key parameters, such as voltage, current, and temperature, and transmit the collected data to the controller. For instance, in a high-performance gardening tool, the collection unit enables precise control of operational conditions, ensuring efficiency and safety.

To protect the apparatus from environmental contaminants, some designs include a dustproof net at the airvent. This net acts as a barrier against debris and dust, commonly encountered during the operation of gardening tools like lawn mowers. While this feature reduces the risk of internal contamination, regular maintenance of the dustproof net is essential to prevent airflow obstruction.

In advanced configurations, a battery pack apparatus may feature at least one second fan, capable of either unidirectional or bidirectional rotation. Positioned near another airvent, the second fan complements the first fan by enhancing airflow management. For example, during self-cleaning modes, the controller might coordinate both fans to blow air toward each other, dislodging accumulated dust and debris from the air duct.

The controller's capability extends to adjusting the sequence and timing of fan operations. For instance, during a self-cleaning cycle, the first fan might blow air outward in one time period, followed by the second fan in another period, and finally, both fans might operate simultaneously in opposing directions. This customizable sequence ensures thorough cleaning of the apparatus and sustained performance.

This comprehensive design approach, combining structural components, intelligent control, and protective measures, makes the battery pack apparatus suitable for demanding applications in gardening tools such as lawn mowers, snow sweepers, hedge trimmers, and sweepers. Each element is tailored to enhance functionality, durability, and user experience.

In some configurations, the battery pack apparatus is designed to operate as a multi-voltage system, capable of outputting at least a first voltage and a second voltage. For instance, the first voltage might be suitable for lighter tasks like hedge trimming, while the second, higher voltage could be used for more power-intensive operations such as snow sweeping. This versatility allows the apparatus to adapt to different gardening tools and tasks efficiently.

The fan system within the apparatus plays a critical role in maintaining thermal stability. For example, during charging, the controller might activate the fan to blow air in a specific direction to remove heat generated by the battery cells. Conversely, during discharging or intensive use, the fan could reverse its airflow to further optimize cooling. This dynamic cooling mechanism ensures that the battery operates within safe temperature limits under varying conditions.

The inclusion of a second fan, particularly one capable of bidirectional rotation, further enhances the apparatus's adaptability. Positioned near an additional airvent, this fan can work in tandem with the first fan to direct airflow precisely where it is needed. For instance, during extended use of a lawn mower, both fans might operate simultaneously to provide robust cooling, while during less demanding tasks, only one fan may be active to conserve energy.

For self-cleaning functionality, the controller is configured to manage the fans in a sequential manner. For example, during the first stage, one fan might blow air outward to expel dust from its side of the housing. In the second stage, the other fan could do the same for its corresponding vent. Finally, both fans might blow air toward each other to clear any remaining debris from the heat dissipation air duct. This process keeps the apparatus clean and maintains optimal airflow.

The rotational speed of the fans can also be adjusted based on operational requirements. For instance, during high-temperature conditions, the controller might increase the fan speed to enhance cooling, while reducing speed during lighter tasks to minimize noise and energy consumption. This flexibility in fan operation ensures both efficiency and user comfort.

In applications like gardening tools, the battery pack apparatus is often integrated into an equipment body that includes a mounting portion. For example, in a snow sweeper, the battery pack is securely mounted within a compartment designed to facilitate airflow and protect the apparatus from external elements. This integration ensures that the battery pack operates effectively even in challenging outdoor conditions.

The housing of the battery pack is designed with durability and functionality in mind. Large air vents on opposite sides allow for efficient heat dissipation while maintaining a compact and lightweight structure. For instance, in a hedge trimmer, this design ensures that the apparatus remains easy to handle while providing sufficient cooling during extended use.

To further enhance performance, some designs include advanced sensors within the collection unit. These sensors continuously monitor critical parameters such as voltage, current, and temperature and relay this data to the controller. For example, if the battery temperature exceeds a predefined threshold, the controller might activate the fans at full speed to prevent overheating, ensuring safety and prolonging the battery's lifespan.

This modular and intelligent approach to battery pack design makes it well-suited for use in a wide range of gardening tools. From lawn mowers to sweepers, the apparatus provides the flexibility, efficiency, and durability needed to handle demanding tasks with ease. Its advanced cooling, self-cleaning, and monitoring capabilities set it apart as a reliable solution for modern gardening applications.

By combining innovative features such as multi-voltage output, dynamic fan control, and dustproof mechanisms, the battery pack apparatus addresses common challenges in gardening tool operation. This ensures that the tools not only perform efficiently but also maintain their reliability and longevity in diverse working environments.

In some embodiments, the battery pack apparatus integrates seamlessly into gardening tools, enabling precise control over operational conditions. For example, the controller's ability to manage fans under different preset conditions ensures that the apparatus adapts to various tasks, such as prolonged lawn mowing or intermittent hedge trimming, without compromising performance or safety.

The fan control methodology extends to scenarios where multiple fans are employed. For instance, when a second fan is introduced, it can be positioned to complement the airflow generated by the first fan. In such configurations, the controller may coordinate both fans to either blow air in the same direction for maximum cooling efficiency or alternate directions to optimize airflow patterns during specific operational cycles.

In cases where both fans are bidirectional, the controller's programmability allows for enhanced customization of cooling strategies. For example, during heavy-duty operations, both fans might operate at high speeds in the same direction to quickly dissipate heat. Conversely, during maintenance or cleaning, the fans could switch to opposing directions to clear debris from the airvents and the heat dissipation air duct.

Gardening tools equipped with these advanced battery pack systems benefit significantly from features like self-cleaning. The automated sequence of fan operations not only ensures that dust and debris are removed efficiently but also reduces the need for manual maintenance. This feature is particularly valuable in environments where tools are exposed to large amounts of organic material, such as during leaf collection or snow clearing.

To enhance usability, the apparatus includes a status indication device that informs users about the operating mode of the fans. This could include visual displays, such as LED indicators showing fan activity, or auditory signals alerting users to changes in operational conditions. These features provide real-time feedback, enabling users to monitor the apparatus's performance and take appropriate actions when necessary.

The incorporation of a dustproof net is another critical aspect of the design, especially for applications where the battery pack is exposed to outdoor elements. While the net effectively blocks debris from entering the system, its design also allows for easy removal and cleaning. Regular maintenance of this component ensures that airflow remains unobstructed, preserving the efficiency of the cooling system.

In gardening tools like sweepers and hedge trimmers, the battery pack apparatus supports versatility through its modular design. By accommodating various configurations of fans, heat dissipation systems, and monitoring devices, the apparatus adapts to the specific requirements of each tool. This modularity not only improves compatibility but also facilitates repairs and upgrades, extending the lifespan of the equipment.

The multi-voltage capability of the battery pack apparatus further enhances its adaptability. By offering at least two voltage levels, the apparatus can power tools with differing energy demands. For instance, a lower voltage might be used for precision trimming, while a higher voltage could support more demanding tasks like snow sweeping. This flexibility makes the apparatus a universal solution for diverse gardening applications.

The robust construction of the battery pack, combined with its intelligent control systems, positions it as a key component in modern gardening tools. Its ability to manage heat, prevent contamination, and provide real-time operational feedback ensures that it meets the rigorous demands of both professional and residential users.

In summary, the battery pack apparatus embodies a comprehensive approach to addressing the challenges of modern gardening tools. By integrating advanced cooling systems, intelligent controls, and modular components, it delivers reliable, efficient, and adaptable performance. This makes it an indispensable solution for a wide range of outdoor tasks, ensuring both user satisfaction and tool longevity.

Considering the limitations of existing technology, the disclosure proposes a battery pack, a gardening apparatus, and a method for controlling the battery pack. These innovations enable the removal of dust from the battery pack by utilizing forward and reverse fan rotation without altering the pack's structure or affecting its normal heat dissipation.

The proposed battery pack includes a housing that contains an accommodating space. The housing has airvents located on opposite sides, facilitating airflow. Inside the accommodating space, there is a support frame, which provides structural stability. At least one battery cell module is mounted within the accommodating space using the support frame to ensure secure placement.

The battery pack also features a heat dissipation air duct formed inside the accommodating space. Both ends of this air duct connect to the airvents on opposite sides of the housing, allowing effective cooling. Additionally, at least one first fan is positioned within the accommodating space near one of the air vents. This fan is capable of bidirectional rotation and operates within a power range of 0.8W to 20W.

A controller is connected to the first fan. It regulates the fan's operation, enabling it to blow air in a first direction under a first preset condition and in a second direction under a second preset condition. The two directions are opposite to each other, ensuring flexible and efficient airflow management.

In one embodiment, the first preset condition corresponds to the battery pack being charged, while the second preset condition corresponds to the battery pack being discharged. These conditions alternate to optimize fan operation. In another embodiment, the first preset condition is based on the battery pack temperature being within a specific temperature range, and the second condition applies when the temperature falls into a different range.

In another scenario, the first preset condition corresponds to a specific time, while the second condition applies to a different time. These variations allow precise control of fan operation to match different requirements. The battery pack can also function as a multi-voltage system, capable of outputting at least a first voltage and a second voltage. For instance, the first voltage may be lower and suited for light tasks, while the second, highervoltage supports more demanding operations.

The battery pack may also incorporate a status indication device. This device is connected to the controller and indicates the operating mode of the fan. It can feature a display to visually communicate status or an audio alert to notify users of specific conditions. This enhances usability and ensures the battery pack operates reliably under varying conditions.

In some configurations, the battery pack includes a collection unit. This unit is connected to both the battery cell module and the controller. It is designed to monitor and collect data such as voltage, current, and temperature of the battery pack. The collected information is then transmitted to the controller for efficient management of the battery pack's operation.

The battery pack may also feature a dustproof net positioned at the airvent. This component helps prevent debris and dust from entering the accommodating space. By doing so, it reduces the accumulation of contaminants that could hinder airflow and cooling efficiency.

In another embodiment, the battery pack includes at least one second fan capable of unidirectional rotation. This second fan is located within the accommodating space and positioned adjacent to another air vent. When the second fan blows air in the first direction, the controller manages both fans to blow air simultaneously in the first direction under a preset condition. Similarly, when the second fan operates in the second direction, the controller ensures that both fans blow air in the second direction concurrently.

For advanced configurations, the battery pack includes at least one second fan capable of bidirectional rotation. This fan is also located within the accommodating space and positioned near another airvent. The controller is configured to manage both the first and second fans, enabling them to blow air in the same direction simultaneously under specific preset conditions.

In certain embodiments, the controller allows for more complex airflow patterns. For example, during a first time period, the controller may activate the first fan to blow air toward its corresponding air vent. During a second time period, the second fan is activated to perform the same function on the opposite side. In a third time period, both fans blow air toward each other to create a self-cleaning effect within the battery pack. The sequence of these operations is adjustable to meet different cleaning and cooling requirements.

The fans included in the battery pack may also have adjustable rotational speeds. This feature allows the system to adapt to different operational needs, such as high-speed airflow for intensive cooling or lower speeds to conserve energy during lighter tasks.

In a separate configuration, the battery pack includes a housing with an accommodating space and air vents on opposite sides. A support frame is situated within this space, and at least one battery cell module is mounted onto the frame. A heat dissipation air duct connects the air vents, ensuring effective cooling. At least one first fan capable of unidirectional rotation is positioned adjacent to one airvent, operating within a power range of 0.8W to 20W. At least one second fan, also unidirectional, is placed near the opposite air vent, with a power range matching that of the first fan. The first and second fans operate in opposite directions to optimize airflow.

The controller in the battery pack is connected to both the first and second fans. It is configured to activate the first fan under a first preset condition and the second fan under a second preset condition. This arrangement ensures efficient airflow management tailored to specific operating scenarios.

In another implementation, the battery pack is integrated into a gardening apparatus. The gardening apparatus includes an equipment body with a mounting portion designed to securely hold the battery pack. The battery pack in this configuration includes a housing with an accommodating space and airvents on opposite sides. A support frame is positioned within the accommodating space, and at least one battery cell module is mounted onto this frame.

The heat dissipation air duct, formed within the accommodating space, connects the airvents on both sides of the housing to facilitate effective cooling. A fan is located within the accommodating space, adjacent to one of the airvents, and operates within a power range of 0.8W to 20W. The controller, connected to the fan, manages its operation. Under a first preset condition, the fan blows air in one direction, while under a second preset condition, it blows air in the opposite direction. These opposite directions ensure efficient heat dissipation and dust removal.

This gardening apparatus can be utilized for various tasks, such as lawn mowing, snow sweeping, hedge trimming, or sweeping, depending on the specific tool integrated with the battery pack. The versatility of the battery pack makes it suitable for a wide range of gardening applications, enhancing both performance and convenience.

To achieve the objectives of efficient dust removal and cooling, the battery pack control method involves managing the fan's direction under preset conditions. For instance, when the first preset condition is met, the fan blows air in a first direction. When the second preset condition is met, the fan reverses to blow air in a second direction. This process effectively removes dust and debris from the battery pack through the airvents.

In one embodiment, the fan includes at least one bidirectional first fan. The method involves controlling the first fan to rotate forward or reverse, depending on the preset conditions, to achieve the desired airflow direction. The flexibility of the fan's operation ensures that dust is efficiently removed, improving the pack's cooling and extending its lifespan.

In another embodiment, the fan system includes at least one unidirectional first fan and at least one unidirectional second fan, positioned adjacent to the airvents on opposite sides of the battery pack. The control method involves activating the first fan to blow air in one direction under the first preset condition and activating the second fan to blow air in the opposite direction under the second preset condition.

For advanced configurations, the fan system includes both bidirectional first and second fans. These fans can be controlled simultaneously to blow air in the same direction under specific preset conditions, optimizing both cooling and cleaning efficiency. In scenarios requiring self-cleaning, the controller can manage the fans to operate sequentially or simultaneously in opposite directions to clear debris from the airvents and internal components.

This innovative approach to airflow management, achieved without altering the structure of the battery pack, enables effective dust removal and improved heat dissipation. By maintaining the internal cleanliness of the battery pack, this method enhances its performance, extends its operational life, and significantly reduces maintenance costs.

### BRIEF DESCRIPTION OF DRAWINGS

Fig. 1 illustrates a perspective view of a battery pack in a specific embodiment of the invention.
Fig. 2 illustrates an exploded view of a battery pack in a specific embodiment of the invention.
Fig. 3 illustrates a functional module diagram of a battery packwith a single bidirectional fan on one side in a specific embodiment of the invention.
Figs. 4a and 4b respectively illustrate schematic diagrams of two operating modes of a fan in a battery packwith a single bidirectional fan on one side in a specific embodiment of the invention.
Fig. 5 illustrates a functional module diagram of a battery packwith fans on both sides in a specific embodiment of the invention.
Figs. 6a and 6b respectively illustrate schematic diagrams of two operating modes of a battery packwith unidirectional fans on both sides in a specific embodiment of the invention.
Figs. 7a through 7d respectively illustrate schematic diagrams of four operating modes of a battery packwith a unidirectional fan on one side and a bidirectional fan on the other side in a specific embodiment of the invention.
Figs. 8a through 8b respectively illustrate schematic diagrams of fan operating modes in the self-cleaning mode of a battery packwith bidirectional fans on both sides in a specific embodiment of the invention.
Fig. 9 illustrates a flowchart of a battery pack control method in a specific embodiment of the invention.

### DETAILED DESCRIPTION

A battery pack is provided, comprising a housing 11 with an accommodating space and airvents 12 on opposite sides of the housing 11. A support frame 14 is positioned inside the accommodating space. At least one battery cell module 15 is installed within the accommodating space using the support frame 14. A heat dissipation air duct is formed inside the accommodating space, with both ends of the air duct connected to the airvents 12 on opposite sides of the housing 11. At least one bidirectional first fan 17a is positioned inside the accommodating space near one of the airvents 12, with a power range of 0.8W to 20W. A controller 19 is connected to the first fan 17a and is configured to control the first fan 17a to blow air in a first direction under a first preset condition and in a second direction under a second preset condition, with the first direction being opposite to the second.

The embodiments of the invention will be further explained using specific examples. Professionals in the field can easily understand the additional advantages and effects of the invention from the disclosed content. The invention can also be implemented or applied through different specific embodiments, and the details in this specification can be modified or altered in various ways without departing from the spirit of the invention.

It should be noted that the illustrations provided in this embodiment are for explaining the basic concepts of the invention in a schematic manner. The diagrams only show components related to the invention and do not represent the actual number, shape, or size of components during implementation. The type, quantity, and proportions of components, as well as their layout, can vary significantly in actual implementation, potentially involving more complex arrangements.

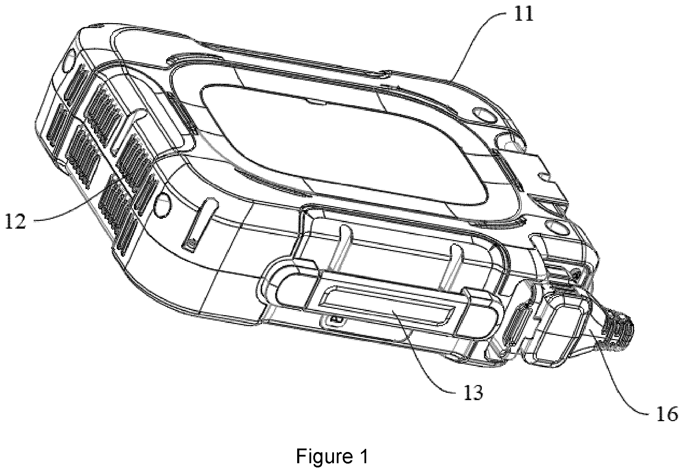

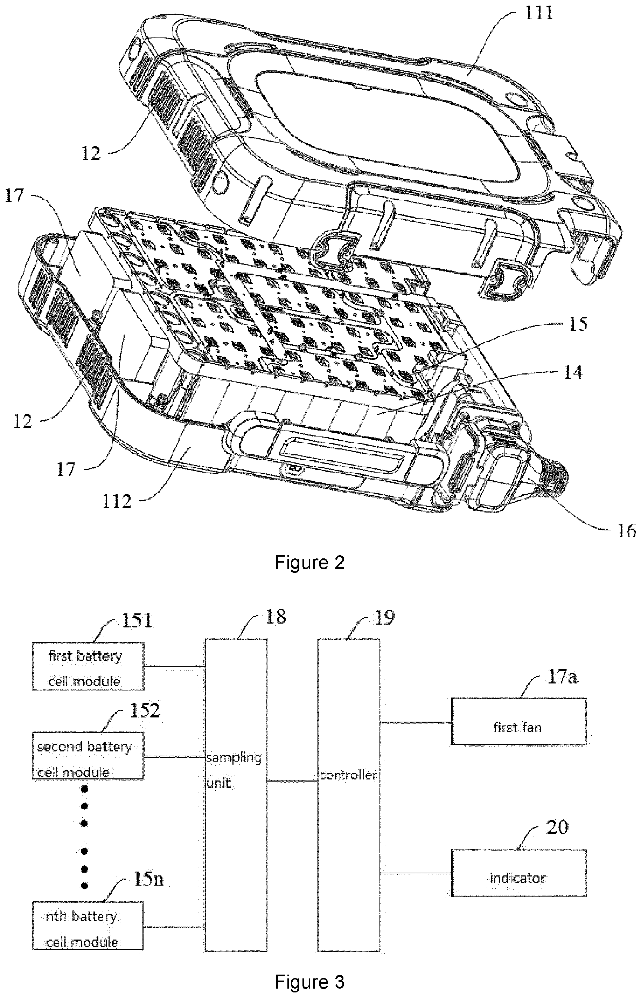

As shown in Fig. 1 and Fig. 2, the invention discloses a battery pack designed to provide power for gardening apparatus. Such gardening apparatus may include tools like lawn mowers and pruners, though it is not limited to gardening tools and can be applied to other devices. The gardening apparatus comprises an equipment body, an operational unit, and a battery pack. The equipment body includes a mounting section (e.g., a battery compartment), where the battery pack is installed to supply power to the operational unit. The battery pack includes a housing 11, a support frame 14, several battery cell modules 15, a collection unit 18, a controller 19, and a fan 17. This battery pack is a high-capacity model, with a capacity, for example, of 1 kWh.

In this embodiment, the housing 11 is rectangular and made of plastic. The housing 11 is equipped with a handle 13 and an external connector 16. The external connector 16 is used to connect with external devices (gardening apparatus or an external power source) for charging or discharging the battery cells. The handle 13 makes it convenient for the user to carry or detach the battery pack from the gardening apparatus.

The housing 11 consists of an upper housing 111 and a lower housing 112, which are fixed together to form the accommodating space. Inside the accommodating space, the support frame 14 is installed, and several battery cell modules 15 are mounted on the support frame 14. The space also contains a heat dissipation air duct for cooling the battery pack. The air duct is connected to air vents 12 on both sides of the housing 11. A fan 17 is positioned near at least one of the air vents 12. This fan 17 draws air through one vent and expels it through the other vent via the air duct, enabling heat dissipation during battery charging and discharging. Fig. 2 illustrates a case where two fans 17 are installed on one side of the housing 11. In practice, fans 17can also be installed on both sides, with one or more fans 17on each side. The fans 17on the same side operate in the same direction.

The power of the fan 17 ranges from 0.8W to 20W, preferably 1W to 15W, and more preferably 2W to 12W, such as 2W, 4W, 6W, 8W, 10W, or 12W. The rotational speed of the fan 17 is adjustable, ranging from 900 RPM to 15,000 RPM, preferably 1,500 RPM to 13,000 RPM, and more preferably 4,000 RPM to 10,000 RPM, such as 4,000 RPM, 5,000 RPM, 6,000 RPM, 7,000 RPM, 8,000 RPM, 9,000 RPM, or 10,000 RPM.

The adjustable speed of the fan 17 can be controlled in various ways. First, it can receive external commands, such as through buttons, touch screens, or voice systems on the battery pack's interface. Alternatively, remote control can be achieved via mobile devices or back-end terminals. Second, it can receive internal commands from the controller 19, which adjusts the fan 17 speed based on parameters like voltage, current, temperature, or time collected by the internal system.

The collection unit 18 is installed in the accommodating space and is connected to both the battery cell modules 15 and the controller 19. It monitors and collects data such as voltage, current, and temperature, which is then transmitted to the controller 19. The collection unit 18 may include a voltage collection module for monitoring the voltage of individual battery cells or modules, a current collection module for measuring current, a temperature collection module for detecting temperature, and a communication interface for transmitting data to the controller 19.

The controller 19 is also positioned inside the accommodating space and connected to the fan 17 and collection unit 18. It manages the battery pack by controlling charging and discharging, temperature regulation, and safety protection based on the data from the collection unit 18. Additionally, the controller 19 adjusts the airflow direction of the fan 17 under different conditions to clean dust and debris from the battery pack through the airvents 12. This function helps prevent the accumulation of debris, improving heat dissipation and extending the battery pack's lifespan while reducing cleaning costs.

To reduce large debris and dust entering the battery pack through the airvents 12, a dustproof net can be installed at the vents. Since the fan 17 alternates airflow directions, larger debris and dust are less likely to accumulate on the dustproof net, reducing the chances of clogging and enhancing the pack's cooling efficiency.

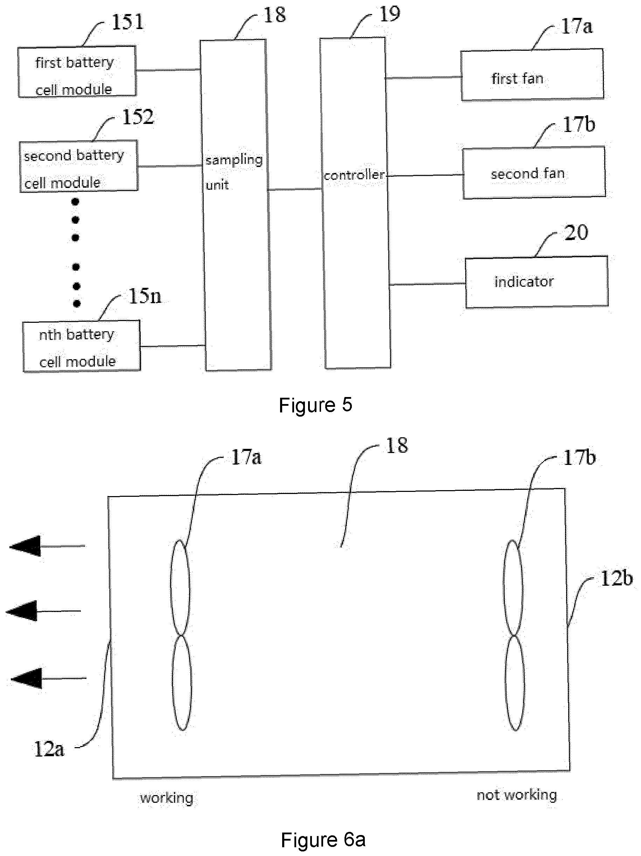

As shown in Fig. 3 and Fig. 5, the battery pack also includes a status indication device 20 connected to the controller 19. This device indicates the operating mode of the fan 17 within the battery pack, displaying different statuses based on the operational mode of the fan 17. The status indication device 20 may consist of a display device, a sound device, or a combination of both. The display device can be a lamp, a light strip, or a screen. The operational modes of the fan 17may include forward rotation, reverse rotation, varying rotational speeds, or modes corresponding to specific functions like cooling, dust removal, or self-cleaning.

For the single bidirectional fan 17 shown in Fig. 2, the display device can show different states depending on the rotation direction of the fan 17. When the fan rotates forward, the display device is in the first display state. When the fan reverses, the status indication device 20 switches to the second display state. If the display device is a lamp or a light strip, the states can be represented by different flashing frequencies, colors, displayed areas, or directions of the light.

Taking the single bidirectional fan 17 in Fig. 2 as an example, the sound device can also change sound states based on the operational mode of the fan 17. When the fan 17 rotates forward, the sound device adopts a first sound state. When the fan 17 reverses, it switches to a second sound state. The sound states can include different alert tones, voice announcements, or the presence or absence of sound. For instance, the voice announcements may indicate "cooling mode activated" or "dust removal mode activated."

In this embodiment, when the battery pack is in dust removal mode, the rotational frequency of the fan 17 can be controlled either automatically or manually. The frequency can remain constant, alternate periodically, or change sequentially. This variability implies that the speed of the fan 17 is adjustable to suit different operational requirements.

Furthermore, in this embodiment, when the battery pack operates as a multi-voltage battery pack, the direction and/or rotational frequency of the fan 17 can be adjusted according to the output voltage. This allows the fan 17 to operate in different modes based on the voltage being supplied.

The dust removal principles of the battery pack will be elaborated upon below, focusing on the various configurations of the fan 17 within the battery pack.

The dust removal functionality of the battery pack is achieved by configuring the fan 17 to alternate its airflow direction. In one configuration, the fan 17 operates in a bidirectional mode, which enables it to blow air in opposite directions based on preset conditions. This alternation effectively removes dust and debris from the airvents 12, preventing their accumulation within the battery pack. By maintaining cleanliness, this functionality also enhances the pack's cooling performance and extends its operational lifespan.

When the fan 17 operates under different preset conditions, such as during charging or discharging of the battery pack, the airflow direction can be adjusted to optimize the removal of dust and heat dissipation. The controller 19 dynamically regulates these changes based on data collected by the collection unit 18, such as temperature, voltage, and current. This automated control ensures consistent performance and minimal manual intervention.

For example, in a battery packwith a single bidirectional fan 17, the controller 19 alternates the rotation of the fan 17 to remove debris trapped at the airvents 12 or inside the heat dissipation air duct. In a more advanced setup with multiple fans 17, the controller 19 can coordinate their operation to further enhance cleaning efficiency. For instance, fans 17 positioned on opposite sides of the housing 11 may work together to create airflow patterns that expel dust effectively.

To support these cleaning mechanisms, the air vents 12 of the battery pack may also be equipped with a dustproof net. The net prevents large debris from entering the battery pack while allowing sufficient airflow for cooling. Additionally, the alternating airflow direction of the fans 17 prevents dust from accumulating on the net itself, reducing the likelihood of clogs and maintaining effective ventilation.

In embodiments featuring state indication devices, users can monitor the operation of the fan 17 during the dust removal process. For example, the display device may signal the cleaning mode by changing colors, flashing patterns, or showing specific messages on a screen. Similarly, sound devices may emit unique tones or voice alerts to inform users that the cleaning function is active.

The flexibility of fan 17 control extends to scenarios where the battery pack operates as a multi-voltage system. In such cases, the direction and rotational speed of the fan 17 can be adjusted to match the voltage output. This ensures that the dust removal process remains effective under varying power conditions, further improving the reliability and versatility of the battery pack.

Through these mechanisms, the battery pack not only maintains optimal cleanliness but also ensures efficient cooling, reduced maintenance costs, and prolonged durability.

### First Embodiment

As shown in Fig. 3, this embodiment features a battery pack with a single bidirectional fan 17 on one side. The battery pack includes multiple battery cell modules 15, such as the first battery cell module 151, the second battery cell module 152, and the nth battery cell module 15n. It also includes a collection unit 18, a controller 19, a first fan 17a, and a status indication device 20. Each battery cell module is connected to the controller 19 via the collection unit 18. The controller 19 is also connected to the first fan 17a and the status indication device 20. The specific functions of these components have been described earlier and are not repeated here.

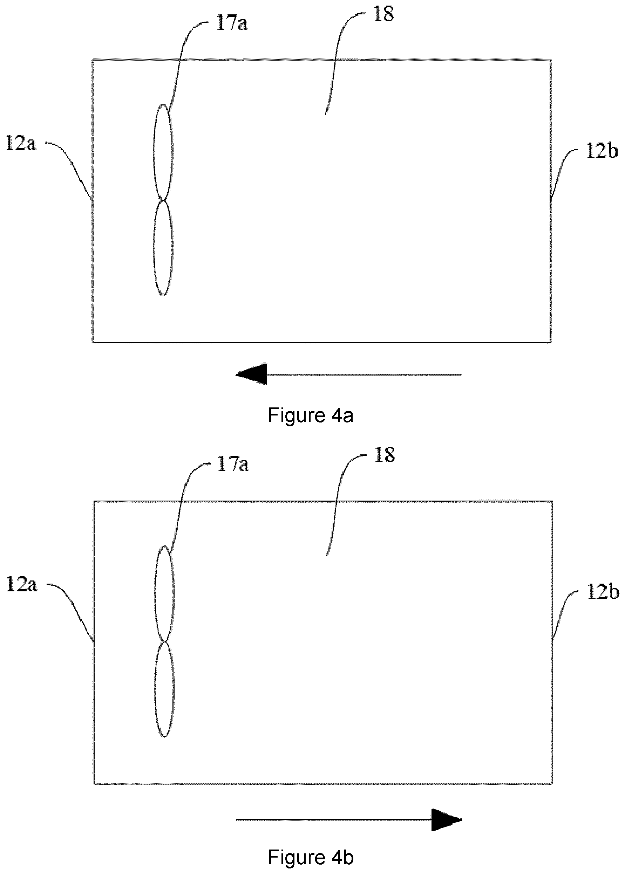

As shown in Figs. 4a and 4b, the housing 11 has air vents 12 on opposite side walls, including the first airvent 12a on the left side and the second airvent 12b on the right side. The first fan 17a is positioned at the first airvent 12a. This first fan 17a is capable of both forward and reverse rotation, enabling bidirectional airflow. By changing the rotational direction of the first fan 17a, the airflow direction in the heat dissipation air duct can be adjusted. This allows for effective cooling while facilitating the removal of dust and debris from the airvents 12, thereby preventing accumulation. This design extends the lifespan of the battery pack and reduces maintenance costs. Alternatively, the first fan 17a can be positioned at the second airvent 12b.

Specifically, as shown in Fig. 4a, the controller 19 can control the first fan 17a to blow air in the first direction under a first preset condition. As shown in Fig. 4b, the controller 19 can reverse the airflow direction of the first fan 17a under a second preset condition. The first direction corresponds to the airflow from right to left, while the second direction corresponds to airflow from left to right. These two directions are opposite and are used consistently across subsequent embodiments.

For example, the first preset condition could be when the battery pack is charging, and the second preset condition could be when the battery pack is discharging. The controller 19 adjusts the rotational direction of the first fan 17a accordingly, alternating the airflow direction and achieving dust removal from the battery pack.

In another example, the first preset condition corresponds to the battery pack's temperature being within a first temperature range, and the second preset condition corresponds to the temperature being in a second temperature range. These temperature ranges do not overlap. The controller 19 alternates the airflow direction of the first fan 17a based on the temperature range to achieve effective dust removal.

As another example, the first preset condition corresponds to a specific time, such as odd days, and the second preset condition corresponds to a different time, such as even days. The controller 19 adjusts the rotational direction of the fan 17 based on the time, alternating the airflow direction to ensure dust removal.

In another scenario, if the battery pack is a multi-voltage system capable of outputting a first voltage and a second voltage, where the first voltage is lower than the second voltage, the first preset condition could correspond to the output of the first voltage, and the second preset condition could correspond to the output of the second voltage. The controller 19 adjusts the rotation direction of the fan 17 accordingly.

### Second Embodiment

As shown in Fig. 5, this embodiment features a battery pack with unidirectional fans 17 on both sides. The battery pack includes multiple battery cell modules 15, such as the first battery cell module 151, the second battery cell module 152, and the nth battery cell module 15n. It also includes a collection unit 18, a controller 19, a first fan 17a, a second fan 17b, and a status indication device 20. Each battery cell module is connected to the controller 19 via the collection unit 18. Additionally, the controller 19 is connected to both the first fan 17a and the second fan 17b, as well as the status indication device 20. The specific functions of these components have been described earlier and are not repeated here.

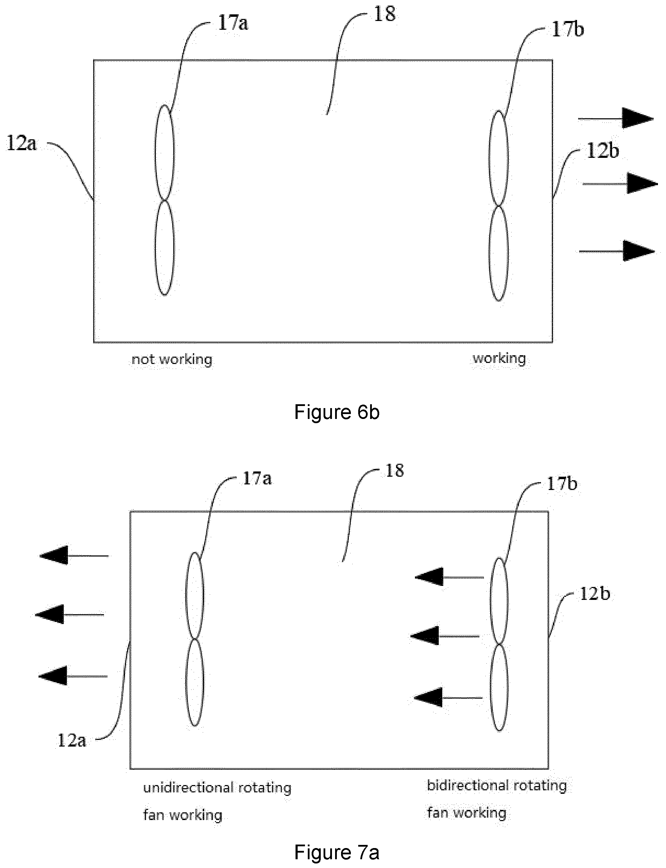

As shown in Figs. 6a and 6b, the housing 11 has air vents 12 on opposite side walls, including the first airvent 12a on the left side and the second airvent 12b on the right side. The first fan 17a and the second fan 17b are unidirectional fans. The airflow directions of the first fan 17a and the second fan 17b are opposite during operation. The first fan 17a is positioned inside the accommodating space near the first airvent 12a and blows air in the first direction. The second fan 17b is positioned inside the accommodating space near the second airvent 12b and blows air in the second direction. By alternately operating the first fan 17a and the second fan 17b during the battery pack's operation, the airflow direction in the heat dissipation air duct can be adjusted. This design ensures proper cooling while facilitating the removal of dust and debris from the airvents 12, preventing accumulation, extending the battery pack's lifespan, and reducing maintenance costs.

Specifically, as shown in Fig. 6a, the controller 19 can activate the first fan 17a under the first preset condition while keeping the second fan 17b inactive, resulting in airflow in the first direction. As shown in Fig. 6b, under the second preset condition, the controller 19 activates the second fan 17b while keeping the first fan 17a inactive, resulting in airflow in the second direction. This alternating airflow achieves dust removal from the battery pack.

For example, the first preset condition could be when the battery pack is charging, and the second preset condition could be when it is discharging. The controller 19 activates different fans under these conditions to generate alternating airflow directions for dust removal.

In another example, the first preset condition corresponds to the battery pack's temperature being within a first temperature range, and the second preset condition corresponds to the temperature being in a second temperature range. These temperature ranges do not overlap. The controller 19 activates different fans based on the temperature range to achieve effective dust removal.

As another example, the first preset condition corresponds to a specific time, such as odd days, and the second preset condition corresponds to a different time, such as even days. The controller 19 activates different fans based on the time, alternating the airflow direction to ensure dust removal.

In another scenario, if the battery pack is a multi-voltage system capable of outputting a first voltage and a second voltage, where the first voltage is lower than the second voltage, the first preset condition could correspond to the output of the first voltage, and the second preset condition could correspond to the output of the second voltage. The controller 19 alternates the operation of the fans accordingly.

### Third Embodiment

As shown in Fig. 5, in this embodiment, the battery pack features a unidirectional fan on one side and a bidirectional fan on the other. It includes multiple battery cell modules 15, such as the first battery cell module 151, the second battery cell module 152, and the nth battery cell module 15n. It also comprises a collection unit 18, a controller 19, a first fan 17a, a second fan 17b, and a status indication device 20. Each battery cell module is connected to the controller 19 via the collection unit 18. The controller is also connected to the first fan 17a, the second fan 17b, and the status indication device 20. The specific functions of these components have been described earlier and are not repeated here.

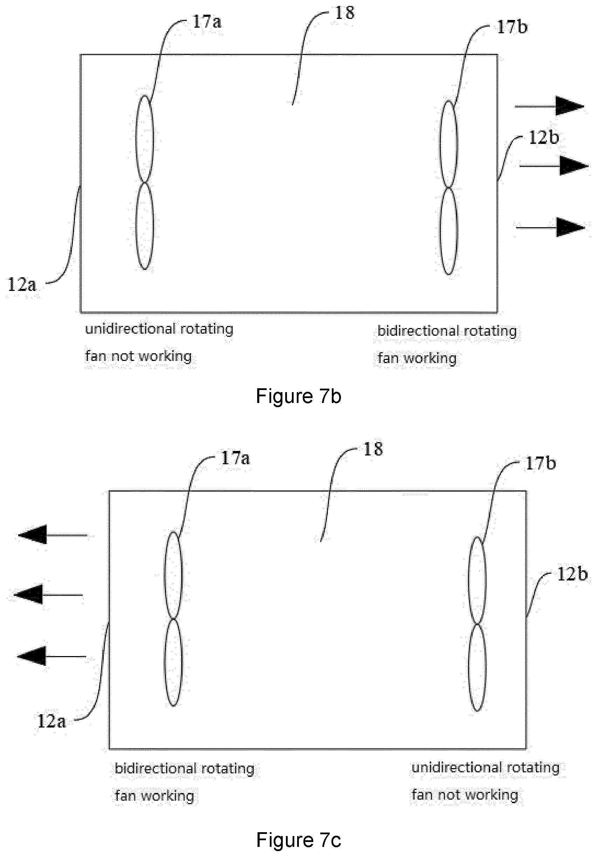

As illustrated in Figs. 7a and 7b, the housing 11 has airvents 12 on its opposite side walls. The first airvent 12a is located on the left side, and the second airvent 12b is located on the right side. The first fan 17a is a unidirectional fan that blows air in the first direction during operation. The second fan 17b is a bidirectional fan. The first fan 17a is positioned near the first airvent 12a inside the accommodating space, while the second fan 17b is positioned near the second airvent 12b inside the same space. During operation, the controller 19 uses a combination of synchronous and asynchronous modes to control the fans. Synchronous mode means both fans operate simultaneously, while asynchronous mode means only one fan operates at a time. This control method adjusts airflow direction and intensity in the heat dissipation air duct, effectively removing dust and debris from the battery pack through the airvents 12, preventing accumulation, and extending the battery pack's lifespan while reducing cleaning costs.

As shown in Fig. 7a, under the first preset condition, the controller 19 operates both the first fan 17a and the second fan 17b simultaneously to blow air in the first direction, thereby enhancing airflow intensity. As shown in Fig. 7b, under the second preset condition, the controller 19 deactivates the first fan 17a and reverses the direction of the second fan 17b to blow air in the second direction, achieving dust removal.

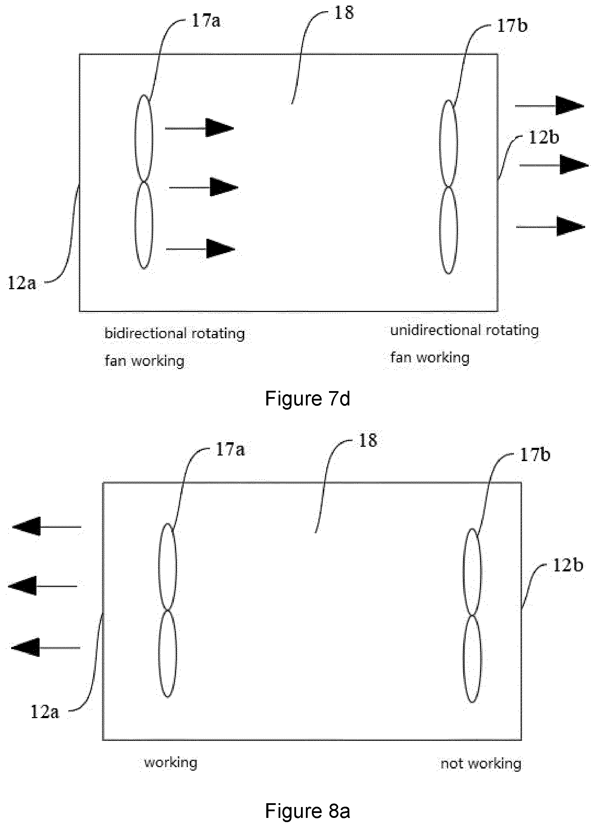

As illustrated in Figs. 7c and 7d, in another specific configuration, the first fan 17a is a bidirectional fan, and the second fan 17b is a unidirectional fan. The second fan 17b blows air in the second direction during operation. The first fan 17a is positioned near the first airvent 12a within the accommodating space, while the second fan 17b is positioned near the second airvent 12b. During operation, the controller uses synchronous and asynchronous modes to control the fans. This approach adjusts airflow direction and intensity, ensuring proper cooling while effectively removing dust and debris, thus preventing accumulation and reducing cleaning costs.

As shown in Fig. 7c, under the first preset condition, the controller 19 operates the first fan 17a to blow air in the first direction while keeping the second fan 17b inactive. As shown in Fig. 7d, under the second preset condition, the controller operates both the first fan 17a and the second fan 17b. The second fan 17b blows air in the second direction, enhancing airflow intensity to achieve dust removal.

Under the first preset condition, the battery pack may be charging, while under the second preset condition, it may be discharging. The controller adjusts the fans' operation during these processes to create alternating airflow directions and intensities for dust removal.

The first preset condition could correspond to the battery pack's temperature falling within a first temperature range, while the second preset condition corresponds to its temperature being within a second, non-overlapping temperature range. The controller adjusts the fans' operation accordingly to ensure effective dust removal.

The first preset condition could correspond to a specific time, such as odd days, while the second preset condition corresponds to even days. The controller alternates the fans' operation at these different times to maintain cleanliness.

For a multi-voltage battery pack capable of outputting a first and second voltage, where the first voltage is lower than the second, the first preset condition could correspond to the output of the first voltage, while the second preset condition corresponds to the output of the second voltage. The controller adjusts the fans' operation to ensure proper dust removal under these conditions.

### Fourth Embodiment

As shown in Fig. 5, this embodiment features a battery pack with bidirectional fans on both sides. It includes multiple battery cell modules 15, such as the first battery cell module 151, the second battery cell module 152, and the nth battery cell module 15n. The battery pack also comprises a collection unit 18, a controller 19, a first fan 17a, a second fan 17b, and a status indication device 20. Each battery cell module is connected to the controller 19 via the collection unit 18. The controller is also connected to the first fan 17a, the second fan 17b, and the status indication device 20. The specific functions of these components have been described earlier and are not repeated here.

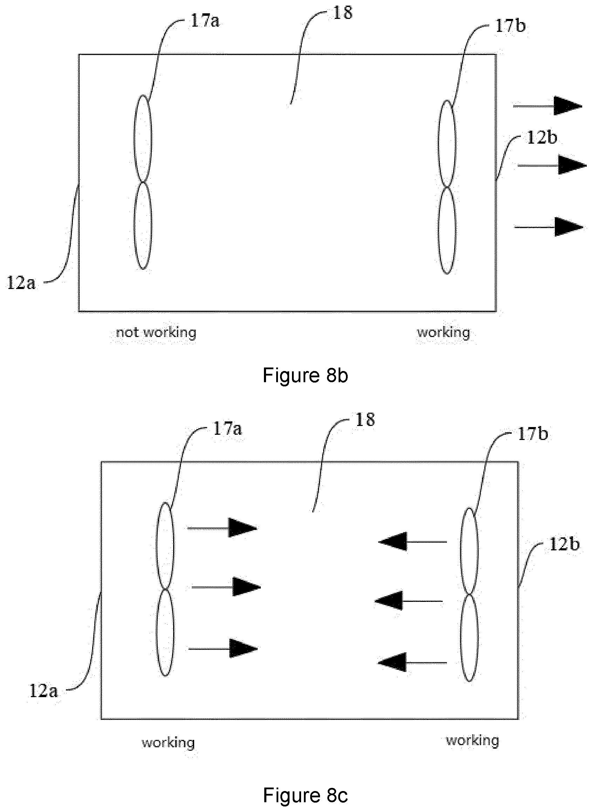

As illustrated in Figs. 8a to 8c, both the first fan 17a and the second fan 17b are bidirectional fans. The first fan 17a is positioned near the first airvent 12a inside the accommodating space, while the second fan 17b is positioned near the second airvent 12b on the opposite side. During operation, the controller 19 utilizes a combination of synchronous and asynchronous modes to control the fans, adjusting airflow direction and intensity in the heat dissipation air duct. This configuration ensures proper cooling while effectively removing dust and debris from the battery pack via the airvents 12. The design prevents accumulation of dust, extends the battery pack's lifespan, and reduces cleaning costs.

The controller 19 operates the fans synchronously under different conditions. Under the first preset condition, it controls the first fan 17a and the second fan 17b to blow air simultaneously in the first direction, increasing airflow intensity. Under the second preset condition, the controller synchronously operates both fans in the opposite direction to achieve enhanced airflow intensity and ensure dust removal. The definitions of the first and second preset conditions are consistent with those described in the third embodiment.

Alternatively, one of the two fans, either the first fan 17a or the second fan 17b, can be configured as a unidirectional fan. In this case, the control logic described in the third embodiment can be applied.

For battery packs with bidirectional fans on both sides, the system can also operate in a self-cleaning mode. This mode involves three steps, as illustrated in Figs. 8a to 8c. In the first time period, the controller 19 operates the first fan 17a to blow air in the first direction, expelling dust through the corresponding first airvent 12a. In the second time period, the second fan 17b blows air in the second direction, expelling dust through the second airvent 12b. In the third time period, the controller operates both fans to blow air toward each other, creating turbulence that dislodges dust and debris from surfaces inside the battery pack. These particles are then expelled through the vents during the first or second time periods. The sequence of these time periods can be adjusted as needed.

The third time period's counter airflow generates turbulence inside the battery pack. This turbulence dislodges dust and debris from surfaces within the pack. The debris is then blown out of the battery pack through the vents during the unidirectional airflow stages of the first or second time periods, completing the self-cleaning process.

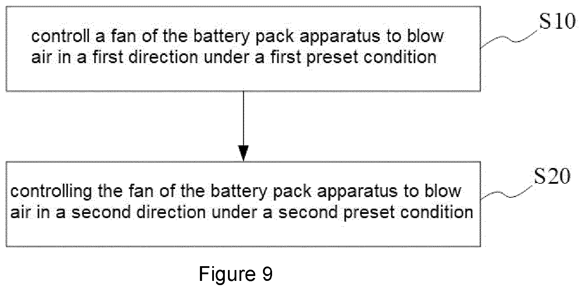

As shown in Fig. 9, the invention also discloses a battery pack control method comprising the following steps:
- S10: Under the first preset condition, control the fan of the battery pack to blow air in the first direction.
- S20: Under the second preset condition, control the fan of the battery pack to blow air in the second direction to achieve dust removal. The first and second directions are opposite.

The fan can be at least one bidirectional fan, such as the first fan 17a shown in Figs. 4a and 4b. Under the first preset condition, the controller operates the fan in the forward or reverse direction to blow air in the first direction. Under the second preset condition, the controller reverses the fan's operation to blow air in the second direction.

The fan can also be a combination of a unidirectional first fan 17a and a unidirectional second fan 17b, as shown in Figs. 6a and 6b. These fans are positioned near the first airvent 12a and the second airvent 12b, respectively. Under the first preset condition, the first fan 17a blows air in the first direction. Under the second preset condition, the second fan 17b blows air in the second direction.

The fan configuration can also include at least one bidirectional first fan 17a and one unidirectional second fan 17b, as shown in Figs. 7c and 7d. These fans are positioned near the first airvent 12a and the second airvent 12b, respectively. Under the first preset condition, the controller operates both fans to blow air in the first direction. Under the second preset condition, only the first fan 17a operates to blow air in the second direction.

For fans positioned as shown in Figs. 8a to 8c, at least one bidirectional first fan 17a and one bidirectional second fan 17b are configured near the first airvent 12a and the second airvent 12b. The control logic ensures synchronized airflow changes to achieve effective cooling and dust removal.

In summary, the invention allows changes in airflow direction under different conditions without altering the structure of the battery pack or compromising its cooling efficiency. Dust and debris are easily expelled from the vents, preventing accumulation and improving cooling. This extends the lifespan of the battery pack and significantly reduces maintenance costs.

For battery packs with longer heat dissipation paths, this design also addresses the issue of uneven cooling. The first cells along the airflow path are cooled effectively, while the last cells may overheat due to rising air temperature. By alternating the airflow direction via forward and reverse fan operation, both sides of the battery pack are cooled evenly, enhancing stability and performance.

Although the invention primarily focuses on battery packs, the described fan and control methods can also be applied to the housings of other devices. By integrating fans and implementing similar control logic, these devices can also achieve effective cooling and dust removal.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the invention and examples have been fully described with reference to the accompanying drawings, it is to be noted that various changes and modifications will become apparent to those skilled in the art. Such changes and modifications are to be understood as being included within the scope of the invention and examples as defined by the claims.

## Claims

1. A battery pack apparatus, comprising:
a housing (11), wherein the housing (11) has an accommodating space, and includes airvents (12) formed on opposite sides of the housing (11);
a support frame (14), wherein the support frame (14) is disposed within the accommodating space;
at least one battery cell module (15), wherein the at least one battery cell module (15) is mounted in the accommodating space via the support frame (14);
a heat dissipation air duct, wherein the heat dissipation air duct is formed within the accommodating space, and wherein two ends of the heat dissipation air duct are respectively in communication with the air vents (12) on the opposite sides of the housing (11);
at least one first fan (17a), wherein the at least one first fan (17a) is capable of bidirectional rotation, is disposed within the accommodating space, and is positioned adjacent to one of the air vents (12), and wherein a power of the at least one first fan (17a) is in a range of 0.8W to 20W;
a controller (19), wherein the controller (19) is connected to the at least one first fan (17a), and wherein the controller (19) is configured to control the at least one first fan (17a) to blow air in a first direction under a first preset condition, and to control the at least one first fan (17a) to blow air in a second direction under a second preset condition, wherein the first direction is opposite to the second direction.

2. The battery pack apparatus of claim 1, wherein the first preset condition corresponds to the battery pack being charged or discharged, and the second preset condition corresponds to the battery pack being in the alternate state of charge or discharge.

3. The battery pack apparatus of claim 1, wherein the first preset condition corresponds to the battery pack temperature being within a first temperature range, and the second preset condition corresponds to the battery pack temperature being within a second temperature range, wherein the first temperature range is different from the second temperature range.

4. The battery pack apparatus of claim 1, wherein the first preset condition corresponds to a first preset time, and the second preset condition corresponds to a second preset time, wherein the first preset time is different from the second preset time.

5. The battery pack apparatus of claim 1, wherein the battery pack is a multi-voltage battery pack capable of outputting at least a first voltage and a second voltage, wherein the first voltage is less than the second voltage, wherein the first preset condition corresponds to the battery pack outputs the first voltage, and the second preset condition corresponds to the battery pack outputs the second voltage.

6. The battery pack apparatus of claim 1, further comprising a status indication device (20), wherein the status indication device (20) is connected to the controller (19), and wherein the status indication device (20) is configured to indicate an operating mode of the fan in the battery pack, and wherein the status indication device (20) comprises a display device and/or an audio device.

7. The battery pack apparatus of claim 1, further comprising a collection unit (18), wherein the collection unit (18) is respectively connected to the battery cell module (15) and the controller (19), and wherein the collection unit (18) is configured to monitor and collect voltage, current, and temperature of the battery pack and transmit the data to the controller (19).

8. The battery pack apparatus of claim 1, further comprising a dustproof net disposed at the airvent (12).

9. The battery pack apparatus of claim 1, further comprising at least one second fan (17b), wherein the at least one second fan (17b) is capable of unidirectional rotation, is disposed within the accommodating space, and is positioned adjacent to another of the air vents (12); wherein when the second fan (17b) blows air in the first direction, the controller (19) is configured to control the first fan (17a) and the second fan (17b) to simultaneously blow air in the first direction under the first preset condition; and wherein when the second fan (17b) blows air in the second direction, the controller (19) is configured to control the first fan (17a) and the second fan (17b) to simultaneously blow air in the second direction under the second preset condition.

10. The battery pack apparatus of claim 1, further comprising at least one second fan (17b), wherein the at least one second fan (17b) is capable of bidirectional rotation, is disposed within the accommodating space, and is positioned adjacent to another of the air vents (12); wherein the controller (19) is further configured to control the first fan (17a) and the second fan (17b) to simultaneously blow air in the first direction under the first preset condition, and control the first fan (17a) and the second fan (17b) to simultaneously blow air in the second direction under the second preset condition.

11. The battery pack apparatus of claim 10, wherein the controller (19) is further configured to: control the first fan (17a) to blow air toward the corresponding air vent (12) during a first time period; control the second fan (17b) to blow air toward the corresponding air vent (12) during a second time period; and control the first fan (17a) and the second fan (17b) to blow air toward each other during a third time period to achieve self-cleaning of the battery pack, wherein the sequence of the first, second, and third time periods is adjustable.

12. The battery pack apparatus of claim 10, wherein a rotational speed of the first fan (17a) and/or the second fan (17b) is adjustable.

13. A battery pack apparatus, comprising:
a housing (11), wherein the housing (11) has an accommodating space, and includes airvents (12) formed on opposite sides of the housing (11);
a support frame (14), wherein the support frame (14) is disposed within the accommodating space;
at least one battery cell module (15), wherein the at least one battery cell module (15) is mounted in the accommodating space via the support frame (14);
a heat dissipation air duct, wherein the heat dissipation air duct is formed within the accommodating space, and wherein two ends of the heat dissipation air duct are respectively in communication with the air vents (12) on the opposite sides of the housing (11);
at least one first fan (17a), wherein the at least one first fan (17a) is capable of unidirectional rotation, is disposed within the accommodating space, and is positioned adjacent to one of the air vents (12), and wherein a power of the at least one first fan (17a) is in a range of 0.8W to 20W;
at least one second fan (17b), wherein the at least one second fan (17b) is capable of unidirectional rotation, is disposed within the accommodating space, and is positioned adjacent to another of the airvents (12), wherein the blowing direction of the at least one first fan (17a) is opposite to the blowing direction of the at least one second fan (17b), and wherein a power of the at least one second fan (17b) is in a range of 0.8W to 20W;
a controller (19), wherein the controller (19) is connected to the at least one first fan (17a) and the at least one second fan (17b), and wherein the controller (19) is configured to control the at least one first fan (17a) to blow air under a first preset condition and to control the at least one second fan (17b) to blow air under a second preset condition.

14. A gardening apparatus, comprising:
an equipment body, wherein the equipment body has a mounting portion;
a battery pack apparatus, wherein the battery pack apparatus is mounted to the mounting portion, and wherein the battery pack apparatus comprises:
a housing (11), wherein the housing (11) has an accommodating space, and includes airvents (12) formed on opposite sides of the housing (11);
a support frame (14), wherein the support frame (14) is disposed within the accommodating space;
at least one battery cell module (15), wherein the at least one battery cell module (15) is mounted in the accommodating space via the support frame (14);
a heat dissipation air duct, wherein the heat dissipation air duct is formed within the accommodating space, and wherein two ends of the heat dissipation air duct are respectively in communication with the air vents (12) on the opposite sides of the housing (11);
a fan (17), wherein the fan is disposed within the accommodating space and is positioned adjacent to one of the air vents (12), and wherein a power of the fan is in a range of 0.8W to 20W;
a controller (19), wherein the controller (19) is connected to the fan (17), and wherein the controller (19) is configured to control the fan (17) to blow air in a first direction under a first preset condition and to blow air in a second direction under a second preset condition, wherein the first direction is opposite to the second direction.

15. The gardening apparatus of claim 14, wherein the gardening apparatus comprises a lawn mower, a snow sweeper, a hedge trimmer, or a sweeper.

16. A method for controlling a battery pack apparatus, comprising:
controlling a fan (17) of the battery pack apparatus to blow air in a first direction under a first preset condition;
controlling the fan (17) of the battery pack apparatus to blow air in a second direction under a second preset condition to remove dust from the battery pack apparatus, wherein the first direction is different from the second direction.

17. The method for controlling a battery pack apparatus of claim 16, wherein the fan (17) of the battery pack apparatus comprises at least one first fan (17a) capable of bidirectional rotation, and wherein the method further comprises:
controlling the at least one first fan (17a) to rotate forward or reverse to blow air in the first direction under the first preset condition; and
controlling the at least one first fan (17a) to rotate reverse or forward to blow air in the second direction under the second preset condition, wherein the first direction is different from the second direction.

18. The method for controlling a battery pack apparatus of claim 16, wherein the fan (17) of the battery pack apparatus comprises at least one first fan (17a) capable of unidirectional rotation and at least one second fan (17b) capable of unidirectional rotation, wherein the at least one first fan (17a) and the at least one second fan (17b) are respectively positioned adjacent to air vents (12) on opposite sides of the battery pack apparatus, and wherein the method further comprises:
controlling the at least one first fan (17a) to blow air in the first direction under the first preset condition; and
controlling the at least one second fan (17b) to blow air in the second direction under the second preset condition, wherein the first direction is different from the second direction.

19. The method for controlling a battery pack apparatus of claim 16, wherein the fan (17) of the battery pack apparatus comprises at least one first fan (17a) capable of bidirectional rotation and at least one second fan (17b) capable of unidirectional rotation, wherein the at least one first fan (17a) and the at least one second fan (17b) are respectively positioned adjacent to air vents (12) on opposite sides of the battery pack apparatus, and wherein the method further comprises:
controlling the at least one first fan (17a) and the at least one second fan (17b) to simultaneously blow air in the first direction under the first preset condition; and
controlling the at least one first fan (17a) to blow air in the second direction under the second preset condition, wherein the first direction is different from the second direction.

20. The method for controlling a battery pack apparatus of claim 16, wherein the fan (17) of the battery pack apparatus comprises at least one first fan (17a) capable of bidirectional rotation and at least one second fan (17b) capable of bidirectional rotation, wherein the at least one first fan (17a) and the at least one second fan (17b) are respectively positioned adjacent to air vents (12) on opposite sides of the battery pack apparatus, and wherein the method further comprises:
controlling the at least one first fan (17a) and the at least one second fan (17b) to simultaneously blow air in the first direction under the first preset condition; and
controlling the at least one first fan (17a) and the at least one second fan (17b) to simultaneously blow air in the second direction under the second preset condition, wherein the first direction is different from the second direction.
